# EUROPEAN PATENT SPECIFICATION

(11) **EP 1 250 852 B1**
(45) Date of publication and mention of the grant of the patent: **11.05.2005**
(21) Application number: 02075966.8
(22) Date of filing: 13.03.2002
(51) Int. Cl.: A23L 1/03, A23D 9/007

(54) **Concentrate of triterpenes**
Konzentrat von Triterpenen
Concentré des triterpènes

(30) Priority: 09.04.2001 EP 01201296
(43) Date of publication of application: 23.10.2002
(73) Proprietor: Loders Croklaan B.V., 1521 AZ Wormerveer (NL)
(72) Inventor: Fritsche, Jan, Unilever R&D Vlaardingen, 3133 AT Vlaardingen (NL); Rosier, Otto Eduard, 3206 GR Spijkenisse (NL); Schmid, Ulrike, Loders Croklaan, 1521 AZ Wormerveer (NL); Schweitzer, Erik, Loders Croklaan, 1521 AZ Wormerveer (NL)
(74) Representative: Stevens, Ian Edward

(56) References cited:
- EP-A- 0 555 484
- DE-B- 1 152 221
- FR-A- 2 541 895
- US-A- 5 948 460
- BOCK W ET AL: "BESTANDTEILE DER AUS APFELTROCKENTRESTERN GEWINNBAREN TRITERPENFRAKTION" DIE NAHRUNG, VCH VERLAGSGESELLSCHAFT, WEINHEIM, XX, vol. 10, no. 5, 1966, pages 409-412, XP000929284 ISSN: 0027-769X

## Description

Ursolic acid and oleanoic acid are well known compounds that can be isolated from a number of fruit skins.A typical example of fruit skins that can be applied are apple skins , but more sources are disclosed in e.g. col.2, 1.16-20 of US 5 948 460. In literature (cf e.g JP 09/020674 or SU 827066 or de Sousa Menezes in Anais da Bras de Cincias, Acad Brasileira de Cincias, Rio de Jan vol 70, 1998, p.761 or Bock c.s in Die Nahrung vol 10, 1966, p.409 or Croteau in Phytochem vol 8, 1969, p.219 ) a standard procedure for isolating ursolic acid and / or oleanoic acid from fruit skins is to perform an extraction of the skins with an organic solvent such as acetone or ethanol. However the results of the prior art techniques were found to be unsatisfactory for a number of reasons. It was found that the products obtained had a severe off taste which prevented their use in food products. Further the compounds could only be obtained in low yields, which was probably due to the presence of high amounts of unidentified organic compounds in the fruit skins, possibly being monomolecular and higher molecular sugar residues, which makes the working-up of the extraction product very difficult. Further it was found that the purity of the products obtained was far below what is considered as acceptable for use in foods while the products also had an undesired greenish colour which made them less acceptable for use in food products that should have a light or bland colour.
We therefore studied whether we could find ways to overcome above disadvantages and to come to concentrates of ursolic acid and oleanoic acid that do not display these disadvantages.

This study resulted in the finding of novel concentrates that comprise relatively large amounts of ursolic acid and oleanoic acid or their food acceptable salts such as their alkali or alkali earth metal salts and that could be used in foods directly without the disadvantages of the known concentrates.Therefore our invention concerns in the first instance a concentrate comprising ursolic acid and oleanoic acid or their food acceptable salts in substantial amounts, wherein the concentrate comprises:
(i) ursolic acid and oleanoic acid or their food acceptable salts in an total amount for the two of more than 22 wt % , preferably 30 to 65 wt %
(ii) sugar residues in an amount of less than 40 wt %, preferably less than 25 wt %, in particular in an amount of 1 to 10 wt %
(iii) while ursolic acid and oleanoic acid or their salts are present in a weight ratio of more than 3.6, preferably 4.0 to 6.0
(iv) the balance being other materials, including glycerides and / or triterpenes other than ursolic acid and oleanoic acid. The sugar residues can comprise mono-molecular sugars such as glucose and fructose but also di-molecular carbohydrates such as sucrose and even oligomers of carbohydrates.
Preferred products are those products wherein the other materials (iv) are present in amounts of 15 to 65 wt %, more preferably 25 to 50 wt %. These other materials comprise glycerides and other triterpenes, in particular the other materials comprise 1 to 40 % glycerides and for the rest other triterpenes which other terpenes comprise maslinic acid and / or pomolic acid and / or pirolonic acid

Food products containing the novel concentrates are also part of the invention and thus the invention also covers food products comprising an effective amount of the concentrate according to claims 1 to 3 so that the food product can deliver by a normal daily consumption of the food product 10 to 100 % of the recommended daily amount of ursolic acid and oleanoic acid. Recommended daily amounts can range from 10 mg to 4 gram per kilogram human body weight depending on the type of deficiency that is intented to be treated with the use of the food product cq health component. The effective amount being that amount that displays a noticeable effect of the consumption of the health component.
The novel concentrates can also be used in the form of food supplements and therefore our invention also concerns food supplements comprising the concentrate according to the invention in encapsulated form. The concentrates can be encapsulated in food grade or food acceptable materials, in particular the encapsulating material used herefore is selected from the group consisting of sugars, starches, modified starches, hydrocolloids, gums and gelatin

In order to enable an economic and feasable route to isolate an useful concentrate of ursolic acid and oleanoic acid from natural waste materials we developed a new process. This process led to higher yields of the desired active components (ursolic acid and oleanoic acid present in this waste material) while simultaneously these active components were obtained in purer form than achievable so far. Thus according to another embodiment of our invention our invention also concerns a method for producing a concentrate with the composition according to the invention comprising:
(i) selecting a natural material comprising ursolic acid and oleanoic acid in sufficient amounts
(ii) drying to a water level of less than 10 wt % of either
   a) the natural material of step (i) or
   b) milled or ground wet material of step (iii a)
(iii) milling or grinding of either
   a) the wet natural material of step (i) or
   b) the dried natural material of step (ii a),
(iv) extracting of either
   a) the milled or ground material resulting from step (iii b) or
   b) the milled or ground material from step (ii a)
   with an organic solvent, preferably being acetone , ethyl acetate or ethanol and collecting an extract of the final concentrate in the solvent
(v) removing the solvent from the extract obtained after step (iv a) or step (iv b).

In those instances wherein the food acceptable salts are desired the above extract can be treated with a base and the salts can be isolated.

Although above process already resulted in better products and higher yields we found that these products and yields could be further improved if step (ii) or step (iii) is either preceded or followed by a wash with an aqueous solution, followed in case a wet product is obtained by a drying, which aqueous solution preferably is applied in a weight ratio between aqueous solution and natural material of more than 2 to 1, preferably 5 : 1 to 30 : 1

Further improvements were obtained if the aqueous solution is a solution of a base and preferably has a pH of 8 to 12 or if the aqueous solution is an acidic solution, preferably with a pH = 0 to 2. The best results were obtained by performing a process wherein the milling is preceded or followed by a treatment with acid and with base (or the other way round) using an intermediate wash until about neutral. So a combined base / acid treatment is used, however the order of these treatments was found to be irrelevant.

Although many different sources of starting materials can be used in our process we found that the best results were obtained when using a cheap and easily available starting material in the form of apple skins.

We further noticed that the particle size of the products obtained after our milling or grinding step(s) also had an impact on the efficiency of our process. It was found that the best results were obtained if the milling or grinding is performed until particles are obtained with a particle size of less than 20 mm, preferably 2 to 20 mm.

Another important product parameter is the temperature during the aequous wash. It was found that the best results were obtained when using a temperature of at least 35 °C, in particular at least 70 °C.

The concentrates that we obtained can be used in food products for many different purposes. They e.g. can be applied in order to provide the food product with the health function known for ursolic acid resp. oleanoic acid. However we also found that these components had an impact on the crystallisation behaviour of the fat present in a food product. Therefore our invention also concerns according to a last embodiment the use of a concentrate of ursolic acid and oleanoic acid or its salts with the composition according to the invention wherein the concentrate is used to modify the crystallisation behaviour of a fat or a fat blend in a final food product to:
(i) increase the hardness of a fat blend or the final product and / or
(ii) to improve the plasticity of the fat blend or final product and / or
(iii) to improve the oral mouthfeel of the fat blend or the final product and /or
(iv) to improve the heat resistance of the fat blend or the final product and / or
(v) to improve the speed of crystallisation of the fat blend or the final product and / or
(vi) to increase the aeration properties of the fat blend or the final product and / or
(vii) to decrease drying times of ice cream coatings

### EXAMPLES

### Example 1

This example shows the benefit of a single/combined pretreatment of apple skins on the amount and purity of ursolic acid concentrate.

Skins from apples were dried in a drying cabinet at 70°C until the residual moisture amounted <3%. From 3000 gram wet skins 900 gram dried material was collected. This material was milled in a Retch mill provided with a sieve of 1.5 mm. All material passed this sieve prior to the pretreatment. The milled skins were pretreated in various ways. The single pretreatments were:
Water,
0.05 M Na2CO3,
0.1N HCL,
0.2M H3PO4

The combined pretreatment was:
0.2M H3PO4 followed by 0.05M Na2CO3

### Single pretreatment

90 gram dried and milled apple skins were suspended in 1800 g demineralized water. The mixture was poured in a double walled vessel of 2 l provided with stirrer and thermometer. The stirrer was set at 500 rpm, the temperature within the vessel was held at 98°C. After 8 h at 98°C the suspension was cooled to 30°C and collected in two centrifugal flasks. The suspension was centrifuged at 3000 rpm for 15 minutes. The clear upper layer was decanted and discarded, the sediment was spreaded on dishes and dried in a drying cabinet at 70°C until the residual moisture amounted <3%. The dried pretreated skins were milled in a Retch mill provided with a sieve of 1.5 mm.

Instead of demineralized water also pretreatments were carried out with acidic or alkaline solutions. The conditions were:
1710 ml 0.1M HCL 6h at 98°C
1710 ml 0.05M Na2CO3 4h at 98°C
1710 ml 0.2M H3PO4 6h at 98°C.

### Combined pretreatment

Additionally to the single pretreatment with 0.2M H3PO4, a second pretreatment was carried out with 0.05M Na2CO3. For that purpose 90 gram dried and milled apple skins was suspend in 1686 ml demineralized water and 24 ml H3PO4 (85%). The mixture was poured in a double walled vessel of 2 1 provided with stirrer and thermometer. The stirrer was set at 500 rpm, the temperature within the vessel was held at 98°C. After 6 h at 98°C the suspension was cooled to 30°C and collected in two centrifugal flasks. The suspension was centrifuged at 3000 rpm for 15 minutes. The clear upper layer was decanted and discarded, the sediment was spreaded on dishes and dried in a drying cabinet at 70°C until the residual moisture amounted <3%. The dried pretreated skins were milled in a Retch mill provided with a sieve of 1.5 mm.

Phosphoric acid treated skins were subjected to an additional treatment with 0.05M Na2CO3. 40 g of this material was suspended in 760 g demineralized water and the pH was adjusted to 7.0 with concentrated sodium hydroxide. 4 g Na2CO3 was added and dissolved. The suspension was stirred at 500 rpm at 98°C for 4 h. The suspension was centrifuged at 3000 rpm for 15 minutes. The clear upper layer was decanted and discarded, the sediment was spreaded on dishes and dried in a drying cabinet at 70°C until the residual moisture amounted <3%. The dried pretreated skins were milled in a Retch mill provided with a sieve of 1.5 mm.

### Extraction

Approximately 18 grams of dried and milled skins (water<3%) were put in a Soxhlet extraction equipment and extracted with acetone. The extraction lasted 3 hours. During that time 18 repetitions per extraction took place. Acetone was almost completely removed by means of a vacuum rotation evaporator. The last traces of acetone were removed by putting the roundbottemflask in a water bath at 80°C and maintaining this to a vacuum pump at 2 mbar for 1 h. The crude acetone extract was weighed and analysed by gas-chromatography.

### Analyses

Crude acetone samples (powder) are first sililated with BSTFA at 70°C for 4h, thereafter dissolved in hexane and then 5 injected in the GC. The conditions of the GC were:

| | |
|---|---|
| Column | CP-Sil 5 CB 10m *0.32 mm Df=0.12 carriergas He |
| Inj. amount | 1 ul |
| inj. type | cool on column sec cooling time 10 s |
| Pressure | 30 kPa |
| Temp inj. | 80°C temp interface 250°C |
| ovenprog | 80°C (2 min)-10°C/min - 360°C (15 min) |

| Results of example 1 | | | | | | | | |
|---|---|---|---|---|---|---|---|---|
| sample | amount (g) of extract from 100 g skins | amount triter-pene acids/ 100 g skins | Composition of acetone extract (%) | | | | | |
| | | | triterpene acids | | High Mol. Weight triterp. acids | TAGs | sugars | others |
| | | | Ursolic | Oleanoic | | | | |
| no pretreatment | 21.2 | 5.5 | 21.1 | 4.7 | 14.8 | 8.6 | 27.8 | 23.1 |
| water 98C | 20.2 | 7.9 | 32.1 | 7.2 | 22.2 | 10.0 | 7.5 | 21.0 |
| 0.05 M Na2CO3 | 19.4 | 8.6 | 36.6 | 7.8 | 19.1 | 10.9 | 2.4 | 23.2 |
| 0.1 M HCL | 28.0 | 10.9 | 31.6 | 7.4 | 16.1 | 12 | 6.6 | 26.3 |
| 0.2 M H3PO4 | 29.8 | 7.8 | 21.8 | 4.3 | 11.8 | 8.8 | 4.5 | 48.8 |
| combined: 0.2M H3PO4 +0.05M Na2CO3 | 22.4 | 10.0 | 37.1 | 7.5 | 17.6 | 12.2 | 3.0 | 22.6 |

### Example 2

This example shows the benefit of milling apple skins on the extractable amount of ursolic acid.

Skins from apples were dried in a drying cabinet at 70°C until the residual moisture amounted <3%. From 898 gram wet skins 274 gram dried material was collected. The water content amounted 2.8%. The batch dried skins was divided into four parts of each 68.5 g. A Retsch mill was applied to mill the skins. The mill has a rotor of 24 teeth and can used with or without a sieve. Each portion was milled differently using different sieves. The first sample (unmilled) was extracted as such. The second sample (crushed) was milled without a sieve. These particles have a diameter of 3-5 mm. The third sample (1.5 mm) was obtained by applying a sieve of 1.5 mm. All skins passed this sieve. The fourth sample (0.2 mm) was obtained by applying a sieve of 0.2 mm.

### Extraction

Acetone extraction was carried out according to the method mentioned in example 1

### Analyses

GC-FID analyses was carried out according to the method mentioned in example 1

| Results of example 2 | | | | | | | | |
|---|---|---|---|---|---|---|---|---|
| sample | amount (g) of extract from 100 g skins | amount triterpene acids/ 100 g skins | Composition of acetone extract (%) | | | | | |
| | | | triterpene acids | | High Mol. Weight triterp. acids | TAGs | sugars | others |
| | | | Ursolic | Oleanoic | | | | |
| no milling | 15.0 | 3.0 | 15.4 | 4.4 | 16.0 | 0.6 | 44.2 | 19.4 |
| crushed | 19.1 | 3.2 | 13.0 | 3.9 | 13.1 | 3.5 | 47.4 | 19.1 |
| 1.5 mm | 22.6 | 3.6 | 12.4 | 3.4 | 12.5 | 6.9 | 46.9 | 18.1 |
| 0.2 mm | 27.9 | 4.9 | 13.8 | 3.8 | 14.2 | 9.7 | 41.4 | 17.1 |

### Example 3

This example shows the results of a combined pretreatment carried out on natural apple skins with minimal processing. The benefit is shown on the amount and purity of the crude acetone extract. There are two process variants.
a: milling with water, acid and alkaline pretreatment followed by drying
b: acid and alkaline pretreatment, followed by drying and milling

Both process variants will be outlined.

### Variant a:

300 g natural apple skins were mixed with 1676 ml demineralized water and 24 ml H3PO4 (85%). The pH was 1.5. The mixture was poured in a double walled vessel of 2 l provided with stirrer and thermometer. The stirrer was set at 500 rpm, the temperature within the vessel was held at 98°C. After 6 h at 98 °C the suspension was cooled to 30°C, neutralised with concentrated NaOH to pH 7 and collected in two centrifugal flasks. The suspension was centrifuged at 3000 rpm for 15 minutes. The clear upper layer was decanted and discarded, the sediment was returned in the vessel. 1700 g water and 9.0 g Na2CO3 was added to the vessel and the mixture was stirred for 4 h at 98°C. The skins were cooled to 30°C, and collected in two centrifugal flasks and centrifuged at 3000 rpm for 15 minutes. The clear layer was discarded the sediment was spreaded on dishes and dried in a drying cabinet at 70°C until the residual moisture amounted <3%. The dried pretreated skins were milled in a Retch mill provided with a sieve of 1.5 mm.

### Variant b:

300 g natural apple skins were mixed with 1676 ml demineralized water and the mixture of skins and water was milled through a colloid mill (Prestomill PM30). The mixture was poured in a double walled vessel of 2 l provided with stirrer and thermometer. 24 ml of concentrated H3PO4 (85%) was added. The stirrer was set at 500 rpm, the temperature within the vessel was held at 98°C. After 6 h at 98 °C the suspension was cooled to 30°C, neutralised with concentrated NaOH to pH 7 and collected in two centrifugal flasks. The suspension was centrifuged at 3000 rpm for 15 minutes. The clear upper layer was decanted and discarded, the sediment was returned in the vessel. 1700 g water and 9.0 g Na2CO3 was added to the vessel and the mixture was stirred for 4 h at 98°C. The skins were cooled to 30°C, and collected in two centrifugal flasks and centrifuged at 3000 rpm for 15 minutes. The clear upper layer was discarded, the sediment was spreaded on dishes and dried in a drying cabinet at 70°C until the residual moisture amounted <3%.

### Extraction

Acetone extraction was carried out according to the method mentioned in example 1

### Analyses

GC-FID analyses was carried out according to the method mentioned in example 1

| Results of example 3 | | | | | | | | |
|---|---|---|---|---|---|---|---|---|
| sample | amount (g) of dried skins from 300 g wet skins | yield of acetone extract from treated skins (%) | Composition of acetone extract (%) | | | | | |
| | | | triterpene acids | | High Mol. Weight triterp. acids | TAGs | sugars | others |
| | | | Ursolic | Oleanoic | | | | |
| variant a | 35.9 | 21.0 | 38.9 | 8.0 | 16.3 | 10.0 | 0.3 | 26.5 |
| variant b | 36.4 | 17.6 | 38.7 | 8.1 | 17.0 | 7.2 | 0.6 | 28.4 |

Another effect of the alkaline pretreament was observed with respect to the improved organoleptical properties. The alkaline treated material showed a significant lighter colour and less off-flavour.

## Claims

1. Concentrate comprising ursolic acid and oleanoic acid or their food acceptable salts in substantial amounts, wherein the concentrate comprises:
(i) ursolic acid and oleanoic acid or food acceptable salts thereof in an total amount for the two of more than 22 wt %, preferably 30 to 65 wt %
(ii) sugar residues in an amount of less than 40 wt %, preferably less than 25 wt %, in particular in an amount of 1 to 10 wt %
(iii) while ursolic acid and oleanoic acid or their salts are present in a weight ratio of more than 3.6, preferably 4.0 to 6.0
(iv) the balance being other materials, including glycerides and / or triterpenes other than ursolic acid and oleanoic acid.

2. Concentrate according to claim 1 wherein the other materials (iv) are present in amounts of 15 to 65 wt %, more preferably 25 to 50 wt %

3. Concentrate according to claims 1 and 2 wherein the other materials comprise 1 to 40 % glycerides and for the rest other triterpenes which other terpenes comprise maslinic acid and / or pomolic acid and / or pirolonic acid

4. Food products comprising an effective amount of the concentrate according to claims 1 to 3 so that the food product can deliver by a normal daily consumption of the food product 10 to 100 % of the recommended daily amount of ursolic acid and oleanoic acid

5. Food supplements comprising the concentrate according to claims 1 to 3 in encapsulated form

6. Food supplements according to claim 5 wherein the encapsulating material is selected from the group consisting of sugars, starches, modified starches, hydrocolloids, gums and gelatin

7. Method for producing a concentrate with the composition according to claims 1 to 3 comprising:
(i) selecting a natural material comprising ursolic acid and oleanoic acid in sufficient amounts
(ii) drying to a water level of less than 10 wt % of either
a) the natural material of step (i) or
b) milled or ground wet material of step (iii a)
(iii) milling or grinding of either
a) the wet natural material of step (i) or
b) the dried natural material of step (ii a),
(iv) extracting of either
a) the milled or ground material resulting from step (iii b) or
b) the milled or ground material from step (ii a)
with an organic solvent, preferably being acetone , ethyl acetate or ethanol and collecting an extract of the final concentrate in the solvent
(v) removing the solvent from the extract obtained after step (iv a) or step (iv b).

8. Method according to claim 7 wherein step (ii) or step (iii) is either preceded or followed by a wash with an aqueous solution, followed in case a wet product is obtained by a drying, which aqueous solution preferably is applied in a weight ratio between aqueous solution and natural material of more than 2 to 1, preferably 5 : 1 to 30 : 1

9. Method according to claim 8 wherein the aqueous solution is a solution of a base and preferably has a pH of 8 to 12

10. Method according to claim 8 wherein the aqueous solution is an acidic solution, preferably with a pH = 0 to 2

11. Method according to claim 7 wherein the milling or grinding is proceded or followed by a treatment with acid and with base (or the other way round) using an intermediate wash until about neutral.

12. Method according to claims 7 to 11 wherein the natural material is washed with an organic solvent, preferably acetone , ethyl acetate or ethanol, prior to subjecting it to any of steps (ii) or (iii) of the process according to claim 7

13. Method according to claims 7 to 12 wherein the natural material is formed by the skins of apples

14. Method according to claims 7 to 13 wherein the milling orgrinding is performed until particles with a particle size of less than 20 mm, preferably 2 to 20 mm are obtained.

15. Method according to claims 7 to 13 wherein the wash with the aqueous solution is performed at a temperature of at least 35 °C., preferably at least 70 °C.

16. Use of a concentrate of ursolic acid and oleanoic acid or its salts with the composition according to claims 1 to 3 wherein the concentrate is used to modify the crystallisation behaviour of a fat or a fat blend in a final food product to:
(i) increase the hardness of a fat blend or the final product and / or
(ii) to improve the plasticity of the fat blend or final product and / or
(iii) to improve the oral mouthfeel of the fat blend or the final product and /or
(iv) to improve the heat resistance of the fat blend or the final product and / or
(v) to improve the speed of crystallisation of the fat blend or the final product and / or
(vi) to increase the aeration properties of the fat blend or the final product and / or
(vii) to decrease drying times of ice cream coatings.

## Patentansprüche

1. Konzentrat, das Ursolsäure und Oleanolsäure oder deren nahrungsmittelakzeptable Salze in wesentlichen Mengen aufweist, wobei das Konzentrat aufweist:
(i) Ursolsäure und Oleanolsäure oder nahrungsmittelakzeptable Salze davon in einer Gesamtmenge der beiden von mehr als 22 Gewichts-%, vorzugsweise 30 bis 65 Gewichts-%;
(ii) Restzucker in einer Menge von weniger als 40 Gewichts-%, vorzugsweise weniger als 25 Gewichts-%, insbesondere in einer Menge von 1 bis 10 Gewichts-%;
(iii) wobei Ursolsäure und Oleanolsäure oder deren Salze in einem Gewichtsverhältnis von mehr als 3,6, vorzugsweise 4,0 bis 6,0 vorliegen; und
(iv) der Rest aus anderen Materialien besteht, einschließlich Glyzeriden und/oder anderen Triterpenen als Ursolsäure und Oleanolsäure.

2. Konzentrat nach Anspruch 1, wobei die anderen Materialien (iv) in Menge von 15 bis 65 Gewichts-%, vorzugsweise 25 bis 50 Gewichts-% vorliegen.

3. Konzentrat nach Anspruch 1 und 2, wobei die anderen Materialien 1 bis 40 % Glyzeride und als Rest andere Triterpene aufweisen, welche anderen Terpene Maslinsäure und/oder Pomolsäure und/oder Pirolonsäure aufweisen.

4. Nahrungsmittelprodukt mit einer solchen wirksamen Menge des Konzentrats nach einem der Ansprüche 1 bis 3, dass das Nahrungsmittelprodukt bei einem normalen täglichen Verbrauch des Nahrungsmittelprodukts 10 bis 100 % der empfohlenen täglichen Menge an Ursolsäure und Oleanolsäure liefert.

5. Nahrungsergänzungsmittel, das das Konzentrat nach einem der Ansprüche 1 bis 3 in eingekapselter Form aufweist.

6. Nahrungsergänzungsmittel nach Anspruch 5, wobei das einkapselnde Material ausgewählt ist aus der Gruppe, die aus Zuckern, Stärken, modifizierten Stärken, Hydrokolloiden, Gummis und Gelatine besteht.

7. Verfahren zum Herstellen eines Konzentrats mit der Zusammensetzung gemäß den Ansprüchen 1 bis 3 mit den Schritten:
(i) Auswählen eines natürlichen Materials, das Ursolsäure und Oleanolsäure in ausreichenden Mengen aufweist;
(ii) Trocknen entweder
a) des natürlichen Materials von Schritt (i) oder
b) von gemahlenem oder nass zerriebenem Material von Schritt (iii a)
auf einen Wassergehalt von weniger als 10 Gewichtsprozent;
(iii) Mahlen oder Zerreiben entweder
a) des nassen natürlichen Materials von Schritt (i) oder
b) des getrockneten natürlichen Materials von Schritt (ii a);
(iv) Extrahieren entweder
a) des gemahlenen oder zerriebenen Materials, das aus dem Schritt (iii b) resultiert, oder
b) des gemahlenen oder zerriebenen Materials von Schritt (ii a)
mit einem organischen Lösungsmittel, das vorzugsweise Azeton, Ethylazetat oder Ethanol ist, und Sammeln eines Extrakts des letztendlichen Konzentrats in dem Lösungsmittel.
(v) Entfernen des Lösungsmittels von dem nach Schritt (iv a) oder Schritt (iv b) erhaltenen Extrakt.

8. Verfahren nach Anspruch 7, wobei dem Schritt (ii) oder dem Schritt (iii) entweder eine Waschung mit einer wässrigen Lösung vorhergeht oder folgt, der in dem Fall, dass ein nasses Produkt erhalten wird, eine Trocknung folgt, wobei die wässrige Lösung vorzugsweise in einem Gewichtsverhältnis zwischen der wässrigen Lösung und dem natürlichen Material von mehr als 2:1, vorzugsweise 5:1 bis 30:1, angewandt wird.

9. Verfahren nach Anspruch 8, wobei die wässrige Lösung eine Lösung einer Base ist und vorzugsweise einen pH-Wert von 8 bis 12 aufweist.

10. Verfahren nach Anspruch 8, wobei die wässrige Lösung eine saure Lösung ist, vorzugsweise mit einem pH-Wert von 0 bis 12.

11. Verfahren nach Anspruch 7, wobei dem Mahlen oder Zerreiben eine Behandlung mit Säure und Base (oder andersherum) unter Verwendung einer Zwischenwaschung bis etwa neutral vorangeht oder folgt.

12. Verfahren nach den Ansprüchen 7 bis 11, wobei das natürliche Material mit einem organischen Lösungsmittel gewaschen wird, vorzugsweise mit Azeton, Ethylazetat oder Ethanol, bevor es einem der Schritte (ii) oder (iii) des Prozesses nach Anspruch 7 unterworfen wird.

13. Verfahren nach den Ansprüchen 7 bis 12, wobei das natürliche Material durch die Haut von Äpfeln gebildet wird.

14. Verfahren nach den Ansprüchen 7 bis 13, wobei das Mahlen oder Zerreiben durchgeführt wird, bis Teilchen mit einer Teilchengröße von weniger als 20 mm, vorzugsweise 2 bis 20 mm erhalten werden.

15. Verfahren nach den Ansprüchen 7 bis 13, wobei das Waschen mit der wässrigen Lösung bei einer Temperatur von mindestens 35 °C, vorzugsweise bei mindestens 70 °C, durchgeführt wird.

16. Verwendung eines Konzentrats von Ursolsäure und Oleanolsäure oder ihres Salzes mit der Zusammensetzung gemäß den Ansprüchen 1 bis 3, wobei das Konzentrat verwendet wird, um das Kristallisationsverhalten eines Fetts oder einer Fettmischung in einem Endprodukt zu modifizieren, um:
(i) die Härte der Fettmischung oder des Endprodukts zu erhöhen und/oder
(ii) die Plastizität der Fettmischung oder des Endprodukts zu verbessern und/oder
(iii) das orale Mundgefühl der Fettmischung oder des Endprodukts zu verbessern und/oder
(iv) die Hitzebeständigkeit der Fettmischung oder des Endprodukts zu verbessern und/oder
(v) die Kristallisationsgeschwindigkeit der Fettmischung oder des Endprodukts zu erhöhen und/oder
(vi) die Belüftungseigenschaften der Fettmischung oder des Endprodukts zu verbessern und/oder
(vii) die Trocknungsszeiten von Eiscremebeschichtungen zu verkürzen.

## Revendications

1. Concentré comprenant de l'acide ursolique et de l'acide oléanoïque ou leurs sels de ceux-ci acceptables pour l'alimentaire en quantités substantielles, le concentré comprenant :
(i) de l'acide ursolique et de l'acide oléanoïque ou des sels de ceux-ci acceptables pour l'alimentaire, en une quantité totale pour les deux supérieure à 22% en poids, de préférence 30 à 65% en poids
(ii) des restes de sucre, en une quantité inférieure à 40% en poids, de préférence inférieure à 25% en poids, en particulier en une quantité de 1 à 10% en poids
(iii) l'acide ursolique et l'acide oléanoïque ou leurs sels étant présents en un rapport pondéral supérieur à 3,6, de préférence 4,0 à 6,0
(iv) le reste étant d'autres matières, notamment des glycérides et/ou des triterpènes autres que l'acide ursolique et l'acide oléanoïque.

2. Concentré selon la revendication 1, dans lequel les autres matières (iv) sont présentes en des quantités de 15 à 65% en poids, de préférence encore 25 à 50% en poids.

3. Concentré selon les revendications 1 et 2, dans lequel les autres matières comprennent 1 à 40% de glycérides et pour le reste d'autres triterpènes, ces autres terpènes comprenant de l'acide maslinique et/ou de l'acide pomolique et/ou de l'acide pirolonique.

4. Produits alimentaires comprenant une quantité efficace du concentré selon les revendications 1 à 3 de sorte que le produit alimentaire peut délivrer, par une consommation quotidienne normale de celui-ci, 10 à 100% de la quantité quotidienne recommandée d'acide ursolique et d'acide oléanoïque.

5. Suppléments alimentaires comprenant le concentré selon les revendications 1 à 3 sous forme encaspulée.

6. Suppléments alimentaires selon la revendication 5, dans lesquels le matériau d'encapsulation est choisi dans le groupe constitué par les sucres, les amidons, les amidons modifiés, les hydrocolloïdes, les gommes et la gélatine.

7. Procédé pour préparer un concentré ayant la composition selon les revendications 1 à 3, comprenant :
(i) le choix d'un matériau naturel comprenant de l'acide ursolique et de l'acide oléanoïque en quantités suffisantes
(ii) le séchage à une teneur en eau inférieure à 10 % en poids, soit
a) du matériau naturel de l'étape (i), soit
b) du matériau mouillé malaxé ou broyé de l'étape (iii a)
(iii) le malaxage ou le broyage soit
a) du matériau naturel mouillé de l'étape (i) soit
b) du matériau naturel séché de l'étape (ii a),
(iv) l'extration soit
a) du matériau malaxé ou broyé résultant de l'étape (iii b) soit
b) du matériau malaxé ou broyé de l'étape (ii a) avec un solvant organique, qui est de préférence l'acétone, l'acétate d'éthyle ou l'éthanol, et la collecte d'un extrait du concentré final dans le solvant,
(v) l'élimination du solvant à partir de l'extrait obtenu après l'étape (iv a) ou l'étape (iv b).

8. Procédé selon la revendication 7, dans lequel l'étape (ii) ou l'étape (iii) est soit précédée soit suivie par un lavage avec une solution aqueuse, suivie, dans le cas de l'obtention d'un produit mouillé, par un séchage, cette solution aqueuse étant de préférence appliquée en un rapport pondéral entre la solution aqueuse et le matériau naturel supérieur à 2 pour 1, de préférence 5:1 à 30:1.

9. Procédé selon la revendication 8, dans lequel la solution aqueuse est une solution d'une base et a de préférence un pH de 8 à 12.

10. Procédé selon la revendication 8, dans lequel la solution aqueuse est une solution acide, de préférence ayant un pH = 0 à 2.

11. Procédé selon la revendication 7, dans lequel le malaxage ou le broyage est précédé ou suivi par un traitement avec un acide et avec une base (ou l'inverse) en utilisant un lavage intermédiaire jusqu'à environ neutralité.

12. Procédé selon les revendications 7 à 11, dans lequel le matériau naturel est lavé avec un solvant organique, de préférence l'acétone, l'acétate d'éthyle ou l'éthanol, avant de le soumettre à l'une quelconque des étapes (ii) ou (iii) du Procédé selon la revendication 7.

13. Procédé selon les revendications 7 à 12, dans lequel le matériau naturel est formé par les peaux de pommes.

14. Procédé selon les revendications 7 à 13, dans lequel le malaxage ou le broyage est effectué jusqu'à ce que des particules ayant une taille de particule inférieure à 20 mm, de préférence 2 à 20 mm, soient obtenues.

15. Procédé selon les revendications 7 à 13, dans lequel le lavage avec la solution aqueuse est effectué à une température d'au moins 35°C, de préférence au moins 70°C.

16. Utilisation d'un concentré d'acide ursolique et d'acide oléanoïque ou de leurs sels avec la composition selon les revendications 1 à 3, dans laquelle le concentré est utilisé pour modifier le comportement de cristallisation d'une graisse ou d'un mélange de graisses dans un produit alimentaire final :
(i) pour augmenter la dureté d'un mélange de graisses ou du produit final et/ou
(ii) pour améliorer la plasticité du mélange de graisses ou du produit final et/ou
(iii) pour améliorer la sensation buccale du mélange de graisses ou du produit final et/ou
(iv) pour améliorer la résistance à la chaleur du mélange de graisses ou du produit final et/ou
(v) pour améliorer la vitesse de cristallisation du mélange de graisses ou du produit final et/ou
(vi) pour augmenter les propriétés d'aération du mélange de graisses ou du produit final et/ou
(vii) pour diminuer les temps de séchage d'enrobages de crèmes glacées.
